(19) Europäisches Patentamt
European Patent Office
Office européen des brevets

(11) EP 0 697 907 B1

(12) EUROPÄISCHE PATENTSCHRIFT

(45) Veröffentlichungstag und Bekanntmachung des Hinweises auf die Patenterteilung:
**12.03.1997 Patentblatt 1997/11**

(21) Anmeldenummer: **94916195.4**

(22) Anmeldetag: **05.05.1994**

(51) Int. Cl.[6]: **B01D 17/04**, G01N 33/18

(86) Internationale Anmeldenummer:
**PCT/EP94/01424**

(87) Internationale Veröffentlichungsnummer:
**WO 94/26382 (24.11.1994 Gazette 1994/26)**

(54) **VERFAHREN ZUR AUFTRENNUNG FESTSTOFFHALTIGER ÖL/WASSER-EMULSIONEN**
METHOD OF SEPARATING OIL-IN-WATER EMULSIONS CONTAINING SOLIDS
PROCEDE DE SEPARATION D'EMULSIONS DU TYPE HUILE DANS EAU, RENFERMANT DES MATIERES SOLIDES

(84) Benannte Vertragsstaaten:
**BE DE ES FR GB NL**

(30) Priorität: **14.05.1993 DE 4316246**

(43) Veröffentlichungstag der Anmeldung:
**28.02.1996 Patentblatt 1996/09**

(73) Patentinhaber: **Henkel Kommanditgesellschaft auf Aktien**
**40191 Düsseldorf (DE)**

(72) Erfinder:
- **SPEI, Brigitte**
  **D-40589 Düsseldorf (DE)**
- **JONKE, Hermann**
  **D-40231 Düsseldorf (DE)**
- **WEHLE, Volker**
  **D-42781 Haan (DE)**

(56) Entgegenhaltungen:
**EP-A- 0 383 522**
**EP-A- 0 503 374**
**FR-A- 2 204 579**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 697 907 B1

## Beschreibung

Die Erfindung betrifft ein Verfahren zur Auftrennung eines Dreiphasensystems in Form einer feststoffhaltigen Öl-/Wasser-Emulsion in die 3 Phasen Feststoff, Wasser und Öl. Dreiphasensysteme dieser Art treten beispielsweise bei der Erdreichsanierung durch Bodenwäsche mit tensidhaltigen Reinigungslösungen auf. Die Auftrennung in die 3 Phasen erfolgt mit Hilfe organischer Flockungs-/Emulsionsspaltmitteln. Die Dosierung der Spaltmittel wird dabei über die Messung des elektrokinetischen Strömungspotentials gesteuert.

Eine Sanierung ölverschmutzter Böden kann dadurch erfolgen, daß man die Böden mit einer tensidhaltigen wäßrigen Lösung wäscht. Durch die Tensideinwirkung wird das an den Sandkörnern haftende Öl emulgiert. Diese Emulgierwirkung kann durch Eintragen kinetischer Energie unterstützt werden. Hierdurch entsteht eine tensidstabilisierte Öl-/Wasser-Emulsion, von der die Grobkornphase des Erdreichs leicht mechanisch abgetrennt werden kann. Probleme bereitet jedoch der sogenannte Schluff, eine silikatische Feststoffraktion mit Teilchengrößen kleiner als etwa 60 μm, die durch einfache mechanische Mittel, wie beispielsweise Sieben, nicht von der Öl-/Wasser-Emulsion abtrennbar ist.

Da man aus ökologischen und ökonomischen Gründen bestrebt ist, das eingesetzte Waschwasser aufzuarbeiten und wieder einzusetzen, müssen das emulgierte Öl sowie die Schlufffraktion aus dem Wasser abgetrennt werden. Unter Verwendung von im Stand der Technik bekannten Flockungs-/Emulsionsspaltmitteln ist dies prinzipiell möglich. Bei herkömmlicher Verfahrensweise erfolgt dabei eine Auftrennung in eine Wasserphase und in den durch Öl- und Tensidadsorption hydrophobierten Schluff. Während die von Öl und Feststoff befreite Wasserphase wieder zur erneuten Wäsche eingesetzt werden kann, bereitet die Entsorgung der ölhaltigen Schluffphase Probleme.

Im Stand der Technik ist es sowohl bekannt, kolloide Feststoffteilchen vom Typ des Schluffs durch Flockung aus einer Wasserphase abzutrennen, als auch eine feststoffreie Öl-/Wasser-Emulsion durch Zugabe von Spaltmitteln zu spalten. In beiden Fällen ist das Erkennen des Dosierendpunktes der Chemikalienzugabe ein besonderes Problem. Üblicherweise wird die optimale Chemikaliendosierung in Laborversuchen, beispielsweise durch einen sogenannten Jar-Test, ermittelt. Es hat jedoch nicht an Versuchen gefehlt, die Chemikaliendosierung durch automatische Endpunktbestimmung zu steuern.

Für die Dosierung von Flockungsmitteln zur Abtrennung von Feststoffen aus Wasser kann beispielsweise das elektrokinetische Strömungspotential, meßbar durch einen "Streaming Current Detector", "SCD", herangezogen werden. Hierfür geeignete Geräte sind im Handel verfügbar. Das Meßprinzip wird in der Bedienungsanleitung des "Streaming Current Detectors" der Firma Milton Roy, erhältlich bei MPT GmbH, Meß + Prozeßtechnik, Konrad-Adenauer-Str. 13, D-6054 Rodgau 1, wie folgt erläutert: "Der "Streaming Current Detector" (SCD) mißt den elektrischen Strom, der zwischen 2 Elektroden in einer durchlaufenden Wasserprobe durch freie, geladene Gegenionen erzeugt wird, die hydraulisch abgeschert sind von kolloidalen Partikeln, die an den Wänden der Zelle angelagert sind. ... Am oberen und unteren Ende eines Kunststoffzylinders befinden sich Elektroden. Die zu messende Probe durchfließt diesen Zylinder. Ein über einen Exzenterantrieb getriebener Kolben bewegt sich in diesem Zylinder auf und ab und erzeugt dadurch hohe Strömungsgeschwindigkeiten. Hierdurch werden die Gegenionen von den kolloidalen Partikeln gelöst und entsprechend der jeweiligen Strömungsrichtung zur oberen oder unteren Elektrode befördert. Der zu messende Wechselstrom ist proportional zum Ladungszustand der in der Meßprobe vorhandenen kolloidalen Partikeln. Der gemessene Strom wird gleichgerichtet, verstärkt und in ein Meßsignal umgewandelt, das zur Überwachung und Steuerung von Flockungs- und Koagulationsprozessen zu verwenden ist." Im weiteren wird ausgeführt, daß derjenige Wert des SCD-Signales, der einer optimalen Flockungsmittelzugabe entspricht, in Vorversuchen zu ermitteln ist.

Durch diese Funktionsbeschreibung wird nahegelegt, das Gerät bei der Flockung von kolloiden Feststoffteilchen aus Wasser einzusetzen. Wie in der DE-A-41 07 643 dargelegt, kann ein solches Prinzip jedoch auch zur Spaltung feststofffreier Öl-/Wasser-Emulsionen mit Ölgehalten von weniger als 5 Gew.-% eingesetzt werden. Das Verfahren wird dadurch charakterisiert, daß man eine Probe der zu spaltenden Emulsion in ein Gerät zur Messung des Strömungspotentials einbringt, dann langsam unter Vermischung das gewünschte Spaltmittel hinzufügt, bis das Strömungspotential möglichst nahe bei 0 liegt oder 0 beträgt und aus der hierfür benötigten Spaltmittelmenge die für die Gesamtmenge der zu spaltenden Emulsion benötigte optimale Spaltmittelmenge berechnet. Demnach wird der Spaltendpunkt einer solchen niedrigbelasteten Öl-/Wasser-Emulsion dadurch definiert, daß das Strömungspotential möglichst nahe bei 0 liegen soll.

In der US-A-4 947 885 wird der Einsatz des gleichen Meßprinzips zur Bestimmung der Kohlenwasserstoffkonzentration in Abwässern einer Erdölraffinerie sowie zur Bestimmung der Spaltmittelmenge zur Spaltung einer solchen Emulsion beschrieben. Hiernach wird die Zugabe eines kationischen Emulsionsspalters je nach Wert des elektrokinetischen Strömungspotentials gesteuert. Dabei wird um so mehr Spaltmittel zugegeben, je negativer der "Streaming Current" (entspricht "Strömungspotential") ist. Bei weniger negativen "Streaming Current" ist die Zugabe des kationischen Spalters entsprechend gering. Damit impliziert auch dieses Dokument, daß die optimale Spaltmittelzugabe durch ein möglichst wenig negatives Strömungspotential erkannt wird.

US-A-5 160 439 beschreibt die gemeinsame Verwendung unterschiedlicher Detektoren, die verschiedene Meßgrößen erfassen, zur Steuerung der Dosierung der Behandlungschemikalien zur Reinigung von Wäschereiabwasser, d. h. zur Entfernung von Fetten und Ölen aus der Waschlauge. Hierfür wird u. a. ein Streaming Current Detector eingesetzt.

Die Korrelation des SCD-Signals mit der optimalen Dosiermenge wird hierbei in Vorversuchen empirisch ermittelt.

Während also die durch das elektrokinetische Strömungspotential gesteuerte Chemikalienzugabe sowohl für die Flockung von Feststoffen einerseits als auch für die Spaltung niederbelasteter Öl-/Wasser-Emulsionen andererseits bekannt ist, wurde der alleinige Einsatz dieses Meßprinzips zur Steuerung der Auftrennung eines Dreiphasensystems Feststoff-Wasser-Öl in die einzelnen Komponenten bisher nicht beschrieben. Da gemäß der Erläuterung des Funktionsprinzips und entsprechend der zitierten Literatur die optimale Chemikaliendosierung durch ein möglichst wenig von 0 abweichendes Strömungspotential charakterisiert ist - unabhängig davon, ob es sich um eine Flockung von Feststoffen oder um eine Abtrennung einer emulgierten Phase handelt - , ist es a priori nicht zu erwarten, daß unter Verwendung des Strömungspotentials als Kontrollgröße aus einer feststoffhaltigen Öl-/Wasser-Emulsion nacheinander der Feststoffanteil und der Ölanteil abgetrennt werden können.

Der Erfindung liegt die Aufgabe zugrunde, eine feststoffhaltige Öl-/Wasser-Emulsion in die 3 Einzelphasen aufzutrennen, indem unter Verfolgung des elektrokinetischen Strömungspotentials die Zugabe der organischen Flockungs-/Emulsionsspaltmittel derart erfolgt, daß zunächst die eine, dann die andere Verunreinigungsphase jeweils einzeln von der Wasserphase abgetrennt werden. Insbesondere wird angestrebt, eine Feststoffphase mit einem so geringen Ölgehalt (< 10 mg/g) zu erhalten, daß sie entweder direkt in den Boden verbracht oder mit biologischen Verfahren weiter entölt werden kann.

Diese Aufgabe wird gelöst durch ein

Verfahren zur Auftrennung feststoffhaltiger Öl-/Wasseremulsionen mit Feststoffgehalten zwischen 0,5 und 20 % und Ölgehalten zwischen 0,01 und 5 % unter Verwendung von kationischen organischen Flockungs-/Emulsionsspaltmitteln, **dadurch gekennzeichnet,** daß man unter Messung des elektrokinetischen Strömungspotentials

a) Flockungs-/Emulsionsspaltmittel bis zu einem ersten Anstieg des negativen Strömungspotentials über den sich jeweils einstellenden Minimalwert dosiert,
b) den sedimentierenden Feststoff von der verbleibenden Öl-/Wasser-Emulsion abtrennt,
c) Flockungs-/Emulsionsspaltmittel bis zu einem Anstieg des negativen Strömungspotentials über einen sich erneut einstellenden Minimalwert dosiert und
d) die flotierende Ölphase abtrennt.

Diesem Verfahren liegt die überraschende Erkenntnis zugrunde, daß bei den hier genannten Dreiphasensystemen der Dosierendpunkt der Flockungs- bzw. Spaltmittel nicht durch ein möglichst nahe bei 0 liegendes Strömungspotential charakterisiert ist. Vielmehr basiert das Verfahren auf der Beobachtung, daß bei Dreiphasensystemen der genannten Art bei Zugabe des Flockungs-/Emulsionsspaltmittels das negative Strömungspotential zunächst zu stärker negativen Werten abfällt und erst bei weiterer Reagenzzugabe allmählich ansteigt. Es wurde gefunden, daß bei Unterbrechung der Spaltmittelzugabe beim erstmalig festgestellten Ansteigen des negativen Strömungspotentials über das anfängliche Minimum hinaus die Feststoffphase aus der Emulsion ausgeflockt wird, ohne daß eine Spaltung der Emulsion eintritt. Der Feststoff kann nun in einem geeigneten im Stand der Technik bekannten Separator, beispielsweise durch Sedimentation oder in einem Hydrozyclon, von der nach wie vor stabilen Öl-/Wasser-Emulsion abgetrennt werden. Setzt man nach Abtrennung des Feststoffs die Dosierung des Flockungs-/Emulsionsspaltmittels fort, sinkt das Strömungspotential nochmals zu negativeren Werten ab, um bei weiterer Reagenzzugabe erneut anzusteigen. Der Dosierendpunkt für die Spaltung der Emulsion ist bei dem erneuten Anstieg des Potentials und nicht erst bei dessen Nullwert erreicht. Verfahrenstechnisch besonders vorteilhaft ist es, daß zur Flockung des Feststoffanteils und zur nachfolgenden Emulsionsspaltung das gleiche Flockungs-/Emulsionsspaltmittel eingesetzt werden kann.

Geeignete organische Flockungs-/Emulsionsspaltmittel sind im Stand der Technik bekannt. Beispielsweise werden in der DE-A-41 07 643 die organischen Emulsionsspalter Polyamine, Polyamidamine, Polyimine, Polyetherpolyamine, quarternierte Polyamine, quarternierte Polyamidamine, Homo-, Co- und Terpolymere auf der Basis von Acrylsäure und Acrylamid und Homopolymerisate von Diallyldimethylammoniumchlorid aufgeführt. Sofern diese Polymerverbindungen nicht aufgrund quarternierter Ammoniumgruppen bereits eine positive Ladung tragen, ist es bevorzugt, durch Protonierung positiv geladene Spezies einzusetzen. Die DE-C-36 27 199 nennt als weitere einsetzbare Spaltmittel Kondensationsprodukte aus o-Toluidin und Formaldehyd, quartäre Ammoniumverbindungen und ionogene Tenside. Als bevorzugt werden Polyamine mit einem mittleren Molekulargewicht in Bereich von 75000 bis 200000, beispielhaft ein Polymer mit der Baugruppe $[\ CH_2\text{-}CH(OH)\text{-}CH_2\text{-}NH(CH_3)\ ]_n^+$, angeführt.

Vorzugsweise wird das erfindungsgemäße Verfahren zur Aufarbeitung des Waschwassers bei der Bodenwäsche eingesetzt. Hierbei wird der Boden ausgehoben, mit einer tensidhaltigen wäßrigen Waschlösung gewaschen und der Entnahmestelle wieder zugeführt. Die anfallende kohlenwasserstoffhaltige Waschlösung wird gereinigt und als Prozeßwasser wieder verwendet. Einen näheren Überblick über die Vorgänge bei der Bodenwäsche und der anschließenden Abwasserbehandlung gibt beispielsweise der Artikel von B. Spei: "Reinigung mineralölkonterminierten Erdreichs mit Tensiden", Wasser, Luft und Boden <u>7 - 8</u> (1991) Seite 77 bis 80. Nach einer mechanischen Abtrennung einer Grobkornfraktion mit einem Teilchendurchmesser > 60 µm, beispielsweise durch Sieben oder Sedimentieren, enthält das ölhaltige Waschwasser eine silikatische Schlufffranktion mit einer Teilchengröße unter 60 µm. Das Verfahren ist besonders geeignet, ein derartiges Dreiphasensystem in die Einzelkomponenten aufzutrennen. Es wird bei Temperaturen zwischen 10 und 90 °C, vorzugsweise bei Umgebungstemperatur, durchgeführt.

Zur manuellen Ermittlung der optimalen Dosierung des Flockungs-/Emulsionsspaltmittels bis zur Abtrennung der Feststoffe einerseits und zur Spaltung der nach Abtrennung der Feststoffe verbleibenden Emulsion andererseits kann man so verfahren, daß man eine Probe der aufzutrennenden feststoffhaltigen Emulsion in ein Gerät zur Messung des Strömungspotentials einbringt, dann langsam unter Vermischung das oder die jeweils gewünschten Spaltmittel so lange hinzufügt, bis das Strömungspotential nach Durchschreiten eines ersten Minimums wieder ansteigt. Nach Abtrennung der ausgeflockten Feststoffe wiederholt man diesen Schritt. Aus den bis zum Erreichen der beiden Dosierendpunkte benötigten Spaltmittelmengen lassen sich dann die beiden für die Gesamtmenge der aufzutrennenden feststoffhaltigen Emulsion benötigten optimalen Spaltmittelmengen berechnen.

Man kann auch so verfahren, daß man aus einem Behälter, in dem sich die aufzutrennende feststoffhaltige Emulsion befindet und in den das oder die Spaltmittel zugegeben werden, kontinuierlich einen Seitenstrom entnimmt und durch ein Gerät zur Messung des Strömungspotentials leitet und die Zugabe an Spaltmittel dann abbricht, wenn das gemessene Potential nach Durchschreiten eines ersten Minimums wieder ansteigt. Man entfernt den ausgeflockten Feststoffanteil, beispielsweise mit Hilfe eines Hydrozyclons. Zur Spaltung der nun feststofffreien Emulsion wiederholt man diesen Prozeß. Diese kontinuierliche Arbeitsweise kann auch automatisiert werden.

Nach diesem Prozeß liegt die Schlufffraktion weitgehend ölfrei vor (Ölgehalt < 6 mg/g). Die Ölfraktion kann zur weiteren Aufarbeitung oder zur Verbrennung weiter entwässert werden. Geeignete Verfahren hierzu sind im Stand der Technik bekannt, beispielsweise aus der DE-A-40 40 022.

**Ausführungsbeispiel**

Das erfindungsgemäße Verfahren wurde mit einem aus der Praxis stammenden Waschwasser einer Bodenwaschanlage erprobt. Nach Abtrennung des Grobkorns (> 60 µm) durch Sedimentation enthielt die Waschlösung einen Feststoffanteil von 3 Gew.-% und wies einen Gehalt an nicht näher charakterisierten Kohlenwasserstoffen - abzüglich der an $SiO_2$ adsorbierbaren Stoffe - von 60 mg pro Liter auf.

Als Flockungs-/Emulsionsspaltmittel wurde ein kationisches quartäres Polyamin der folgenden Formel

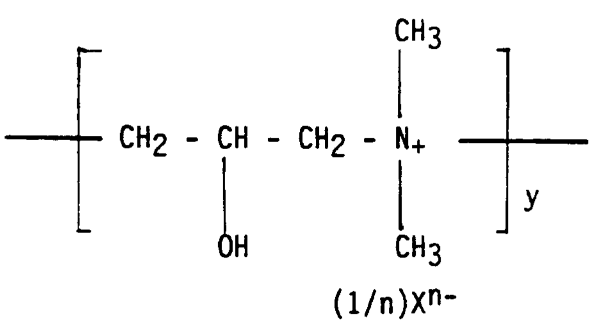

(I)

X = Cl, mittlere Molmasse 200000 Dalton, in Form einer 10 %igen wäßrigen Lösung eingesetzt. Diese Lösung wurde in 0,5- bis 1-ml-Portionen auf 10 l Waschwasser dosiert, entsprechend einer Schrittfolge von 5 bis 10 ppm. 2 Minuten nach jeder Dosierung wurden der SCD-Wert abgelesen und eine 100-ml-Probe zur Kohlenwasserstoffanalyse gezogen. Zur Durchmischung genügte die Turbulenz der Tauchpumpe des SCD-Gerätes. Bei dem verwendeten SCD-Geräte handelte es sich um den Streaming Current Detector, Modell SC 4200 der Firma Milton Roy, erhältlich durch die vorstehend genannte MPT GmbH, Meß + Prozeßtechnik.

Die Kohlenwasserstoffanalysen der Proben wurden nach 30 Minuten Standzeit mit der Wasserphase nach Abtrennung von Flotat und Sediment durchgeführt. Nach Erreichen des "Flockungsendpunktes" wurde die Wasserphase nach 40 Minuten Standzeit vom Sediment dekantiert und weiterbehandelt. Die einzelnen Meß- und Analysendaten sind in der Tabelle aufgeführt. Der Flockungsendpunkt ist demnach bei einem ersten Wiederansteigen des SCD-Wertes nach Zugabe von 30 ppm Spaltmittel erreicht. Wie die Kohlenwasserstoffwerte der Tabelle zeigen, wird der Endpunkt für die Emulsionsspaltung bei einer Zugabe von insgesamt 65 ppm Spaltmittel, entsprechend dem Wiederanstieg des SCD-Wertes nach seinem zweiten Minimum, erreicht.

Tabelle

| 3-Phasentrennung, SCD-kontrolliert (SCD-Wert auf Leitungswasser = 0 kalibriert) | | | |
|---|---|---|---|
| ppm Spaltmittel | SCD-Wert | Kohlenwasserstoffe in Wasserphase, mg/l | Bemerkung |
| 0 | -40 | 60 | |
| 15 | -46 | 50 | |
| 20 | -46 | 50 | |
| 30 | -38 | 50 | Flockungsendpunkt |
| Feststoff abgetrennt | -30 | 45 | |
| 55 | -35 | 15 | |
| 65 | -33 | 6 | Spaltungsendpunkt |
| 80 | -29 | 6 | |
| 95 | -25 | 6 | |
| 115 | -10 | 6 | |
| 140 | +15 | nicht best. | |

## Patentansprüche

1. Verfahren zur Auftrennung feststoffhaltiger Öl-/Wasseremulsionen mit Feststoffgehalten zwischen 0,5 und 20 % und Ölgehalten zwischen 0,01 und 5 % unter Verwendung von kationischen organischen Flockungs-/Emulsionsspaltmitteln, **dadurch gekennzeichnet,** daß man unter Messung des elektrokinetischen Strömungspotentials

   a) Flockungs-/Emulsionsspaltmittel bis zu einem ersten Anstieg des negativen Strömungspotentials über den sich jeweils einstellenden Minimalwert dosiert,
   b) den sedimentierenden Feststoff von der verbleibenden Öl-/Wasser-Emulsion abtrennt,
   c) Flockungs-/Emulsionsspaltmittel bis zu einem Anstieg des negativen Strömungspotentials über einen sich erneut einstellenden Minimalwert dosiert und
   d) die flotierende Ölphase abtrennt.

2. Verfahren nach Anspruch 1, dadurch gekennzeichnet, daß es sich bei dem Feststoff um silicatischen Schluff mit einer Teilchengröße unter 60 $\mu$m handelt.

3. Verfahren nach einem oder beiden der Ansprüche 1 und 2, dadurch gekennzeichnet, daß zur Flockung des Feststoffanteils im Teilschritt a) und zur Spaltung der Öl-/Wasser-Emulsion im Teilschritt c) das gleiche Flockungs-/Emulsionsspaltmittel verwendet wird.

4. Verfahren nach einem oder mehreren der Ansprüche 1 bis 3, dadurch gekennzeichnet, daß man als Flockungs-/Emulsionsspaltmittel durch Protonierung und/oder Quarternierung kationisch modifizierte Stickstoff-haltige Polymere einsetzt.

5. Verfahren nach einem oder mehreren der Ansprüche 1 bis 4, dadurch gekennzeichnet, daß es sich bei der feststoffhaltigen Öl-/Wasser-Emulsion um das Waschwasser nach einer Erdreichwäsche mit tensidhaltigen Reinigern handelt, von dem die Grobkornfraktion mit einem Teilchendurchmesser > 60 $\mu$m mechanisch abgetrennt wurde.

6. Verfahren nach einem oder mehreren der Ansprüche 1 bis 5, dadurch gekennzeichnet, daß man es bei Temperaturen zwischen 10 und 90 °C durchführt.

## Claims

1. A process for removing water from industrial waste oils which are microfiltration or ultrafiltration retentates or which have been obtained by creaming up in a mechanical separation unit and represent oil-in-water emulsions with an oil content of greater than 15% by weight, characterized in that one or more polyether compounds from the group of polymers of ethylene oxide and/or 1,2-propylene oxide obtainable by ethoxylation and/or propoxylation of alcohols containing up to 10 carbon atoms in the molecule, the alkoxylation products containing on average 20 to 100 moles of ethylene oxide or propylene oxide or 10 to 40 moles of ethylene oxide and 20 to 50 moles of propylene oxide, is/are dispersed in the emulsion and phase separation is carried out.

2. A process as claimed in claim 1, characterized in that the polyether compounds are selected from alkoxylation products with, initially, 10 to 40 moles of ethylene oxide and, subsequently, with 20 to 50 moles of propylene oxide, the number of propylene oxide groups preferably exceeding the number of ethylene oxide groups.

3. A process as claimed in one or both of claims 1 and 2, characterized in that the polyether compounds are selected from alkoxylation products of alcohols containing 1 to 5 carbon atoms and 1 to 4 hydroxyl groups, each carbon atom bearing at most one hydroxyl group.

4. A process as claimed in claim 3, characterized in that the polyether compounds are selected from alkoxylation products of alcohols containing 1 to 4 carbon atoms and 1 or 2 hydroxyl groups.

5. A process as claimed in claim 4, characterized in that the alkoxylation products are alkoxylation products of propylene glycol.

6. A process as claimed in one or more of claims 1 to 5, characterized in that, after the dewatering agent has been mixed with the emulsion, phase separation is carried out by centrifugation.

## Revendications

1. Procédé de déshydratation d'huiles techniques résiduaires, qui représentent des rétentats d'une micro- ou d'une ultrafiltration, ou qui ont été obtenues par écrémage dans un dispositif de séparation mécanique, et qui constituent des émulsions du type huile dans eau présentant une teneur en huile supérieure à 15 % en poids, caractérisé en ce que l'on disperse dans l'émulsion un ou plusieurs composés de polyéther appartenant au groupe des

    polymères d'oxyde d'éthylène et/ou de 1,2-propylène, obtenables par éthoxylation et/ou propoxylation d'alcools comportant chacun jusqu'à 10 atomes de carbone dans la molécule, les produits d'alcoxylation contenant en moyenne 20 à 100 moles d'oxyde d'éthylène ou de propylène ou 10 à 40 moles d'oxyde d'éthylène et 20 à 50 moles d'oxyde de propylène,

    et en ce que l'on induit une séparation de phases.

2. Procédé selon la revendication 1, caractérisé en ce que les composés de polyéther sont sélectionnés parmi les produits d'alcoxylation comportant tout d'abord 10 à 40 moles d'oxyde d'éthylène et ensuite 20 à 50 moles d'oxyde de propylène, le nombre des groupes d'oxyde de propylène excédant de préférence celui des groupes d'oxyde d'éthylène.

3. Procédé selon une des deux revendications 1 et 2 ou selon les deux, caractérisé en ce que les composés de polyéther sont sélectionnés parmi les produits d'alcoxylation d'alcools comportant 1 à 5 atomes de carbone et 1 à 4 groupes hydroxyle, chaque atome de carbone portant au maximum un groupe hydroxyle,

4. Procédé selon la revendication 3, caractérisé en ce que les composés de polyéther sont sélectionnés parmi les produits d'alcoxylation d'alcools comportant 1 à 4 atomes de carbone et 1 ou 2 groupes hydroxyle.

5. Procédé selon la revendication 4, caractérisé en ce que les produits d'alcoxylation sont des produits d'alcoxylation de propylèneglycol.

6. Procédé selon une ou plusieurs des revendications 1 à 5, caractérisé en ce que l'on opère une séparation de phases par centrifugation après le mélangeage du déshydratant.